# EUROPEAN PATENT SPECIFICATION

(11) **EP 0 941 296 B1**
(45) Date of publication and mention of the grant of the patent: **22.09.2004**
(21) Application number: 97945940.1
(22) Date of filing: 25.11.1997
(51) Int. Cl.: B65D 79/00

(54) **Container for foodstuffs**
Behälter für Lebensmittel
Emballage pour produits alimentaires

(30) Priority: 26.11.1996 GB 9624618
(43) Date of publication of application: 15.09.1999
(73) Proprietor: National Starch and Chemical Limited, Berkshire SL1 4DA (GB)
(72) Inventor: LEES, William, Arthur, Hants SO51 0NP (GB); MOULDS, Richard, John, Hants SO31 7DY (GB)
(74) Representative: Harding, Charles Thomas
(86) International application number: PCT/GB1997/003226
(87) International publication number: WO 1998/023701

(56) References cited:
- EP-A- 0 459 652
- EP-A- 0 639 593
- US-A- 3 616 963
- US-A- 4 360 551
- US-A- 5 037 700
- US-A- 5 070 174
- US-A- 5 083 975
- US-A- 5 101 993
- US-A- 5 203 491
- US-A- 5 455 086

## Description

The present invention relates to a container.

It is known to use adhesives to prepare containers for foodstuffs, such as foods and beverages. For example, it is known to use an adhesive to adhere a coated aluminium pressurised gas container to the inner surface of the base of a can, especially when that can is for containing beer. Pressurised gas containers are generically called "widgets".

Another example of the use of adhesives in preparing containers for foodstuffs may be found in US-A-5370941 which describes a laminated film comprising a base resin layer, a barrier layer and an adhesive layer. The adhesive layer is made from a blend of ethylene, alkyl (meth)acrylate, a copolymer of propylene and ethylene, and other ethylene impact copolymers.

We now recognise that some adhesive components may leak into, and thereby contaminate, foodstuffs contained in containers. This, in turn, could make the foodstuffs unpalatable or, just as importantly, not suitable for consumption, in particular human consumption.

The present invention seeks to overcome this problem.

According to a first aspect of the present invention there is provided a container for a foodstuff having held inside a body, wherein the body is adhered to at least a part of at least one inner wall of the container by an adhesive, wherein the adhesive is formulated from one or more organic components selected from the FDA approved list of compounds presented in Section 175.300 - 21 CFR Ch (4-1-95 Edition).

The adhesives of the present invention are advantageous in that any leakage of the adhesive component(s) into the foodstuff contained in the container would not make the foodstuff unsuitable for consumption, in particular human consumption.

Thus, the present invention is based on the surprising finding that it is possible to formulate an adhesive composition for use in preparing a container for foodstuffs (such as a beverage) wherein the adhesive is formulated from organic components that have FDA approval.

The term "wall" includes any side wall, base portion or top portion.

The adhesive composition of the present invention is an adhesive in that it is a non-metallic substance capable of joining materials by surface bonding (cohesion) and the bond possessing adequate internal strength adhesion. This definition is in accordance with the definition of "adhesive" presented in the February 1996 version of the draft European standard booklet EN 923:199X as compiled by the European Committee for Standardisation.

The adhesive composition does not primarily serve as a functional barrier between food and a substrate.

The adhesive is formulated solely from one or more organic components that have FDA approval. This means that the adhesive does not contain organic components that do not have FDA approval.

Preferably, the adhesive further comprises one or more inorganic inert filler components. These inert filler components may have FDA approval.

In a highly preferred embodiment, the adhesive is not water soluble.

The adhesive compositions can be tailored to cure as quickly or slowly as desired, such as by the addition of suitable and acceptable catalysts etc. or even varying the temperature of application and/or for curing.

In a preferred embodiment, the adhesive of the present invention is applied as a bead - which may be in the form of a beaded line of adhesive. This beaded line may be straight, kinked or circular - depending on what substrates the adhesive is meant to bond.

Preferably, the adhesive is formulated from at least two or more organic components that have FDA approval.

Each of the organic components of the adhesive according to the present invention is mentioned in the FDA listings as issued by the respective US Government Department - namely the Food And Drug Administration. A suitable and preferred list is presented in Section 175.300 - 21 CFR Ch (4-1-95 Edition) pages 146 - Section 175 - 153. This list is shown in the Appendix presented below.

Suitable adhesive formulations may be prepared from one or more of an epoxy organic component and/or one or more of a polyamine organic component and/or one or more of a triethylene tetra-amine component; wherein each component has FDA approval.

Preferably, the adhesive formulations is prepared from one or more of a polyamine organic component and one or more of a triethylene tetra-amine component, and optionally one or more of an epoxy organic component; wherein each component has FDA approval.

The adhesive may be a one part formulation or a multi-part formulation. Preferably, the adhesive is a two-part formulation. Thus, in one preferred embodiment the adhesive system may be a 1:1 adhesive system comprising one or more of a polyamine organic component.

The term "formulated from one or more components that have FDA approval" includes adhesives comprising or made from one or more organic components that have FDA approval.

Preferably, the adhesive formulations are prepared by blending two or more organic components having FDA approval. The order of preparing the adhesive formulation will be apparent to those skilled in the art.

The adhesive can be any one or more of an aerobic adhesive (i.e. sets in the presence of oxygen), an anaerobic adhesive (i.e. sets in the absence of oxygen), a pressure adhesive (i.e. sets on the application of a force), and a light curable adhesive (i.e. sets on exposure to a light source, such as UV light) or an adhesive that sets by a chemical reaction.

For some applications, preferably the adhesive is not a hot melt adhesive.

For some applications, preferably the adhesive is not a pressure sensitive adhesive.

Preferably the body is non-metallic.

Preferably the body is formed of a plastics material.

Preferably the body is formed of polypropylene. Alternatively, the body may be formed of polyethylene, nylon, PET (poly(ethyleneterephthalate)), polysulphone, polycarbonate or acetal.

Preferably the polypropylene has been pre-treated by any one of flame, corona discharge or plasma discharge.

Preferably the body is shaped to contain therein a pressurised gas at some stage for use.

Preferably the body contains therein a pressurised gas.

Preferably the body is for use as a widget.

Preferably the body is in use as a widget.

Preferably the container is a can.

Preferably the container is for a foodstuff.

Preferably the foodstuff is a beverage.

Preferably the beverage is a beer.

Preferably the beverage is an alcoholic beverage.

Preferably the adhesive comprises particles having an average particle size of no greater than 50 µm.

Preferably the adhesive comprises particles having a particle size of no greater than 50 µm.

Preferably the adhesive comprises no particles having a particle size of greater than 50 µm.

Preferably the adhesive sets (e.g. cures) at a temperature of between about 35°C and about 200°C.

Preferably the adhesive sets (e.g. cures) at a temperature of between about 35°C and about 160°C.

Preferably the adhesive sets (e.g. cures) at a temperature of between about 60°C and about 100°C.

Preferably, the application and adhesion process occurs at a temperature of less than about 120°C. This is particularly preferred when a plastics body is fitted and bonded to the inside of a coated aluminium can.

Advantages of the adhesive of the present invention include: ease of formulation; ease of storage; ease of handling; ease of application; the ability to prevent substantial relative movement of the two substrates that are to be bonded upon curing of the adhesive; the ability to anchor a body within a container before bonding the body to the inside of the container upon the cure of the adhesive; flow readily at the application temperature; bond a number of substrates; meet the FDA regulations for food and beverage contact; set fairly quickly; and retain adequate strength for at least two years.

The adhesive can be a one part formulation - e.g.-the adhesive is ready to apply without the need to mix with another component. Alternatively, the formulation can be formed from at least two parts - e.g. the final adhesive formulation is formed by mixing two formulations (each of which is formulated from one or more organic components that have FDA approval) prior to application. Preferably, for some applications the adhesive is a two part formulation. However, for ease of use, it is highly preferred that for some applications the adhesive is a one part formulation.

According to a preferred aspect of the present invention there is provided a container for a foodstuff having held in the inside thereof a body, wherein the body is adhered to at least a part of at least one inner wall of the container by an adhesive, wherein the adhesive is formulated from one or more organic components having FDA approval; wherein the body is formed of a plastics material; wherein the body is shaped to contain therein a pressurised gas; wherein the foodstuff is a beverage; and wherein the adhesive sets at a temperature of between about 35°C and about 200°C.

According to a preferred aspect of the present invention there is provided a container for a foodstuff having held in the inside thereof a body, wherein the body is adhered to at least a part of at least one inner wall of the container by an adhesive, wherein the adhesive is formulated from one or more organic components having FDA approval; wherein the body is formed of a plastics material; wherein the body is shaped to contain therein a pressurised gas; wherein the foodstuff is a beverage; and wherein the adhesive sets at a temperature of between about 35°C and about 160°C.

According to a highly aspect of the present invention there is provided a container for a foodstuff having held in the inside thereof a body, wherein the body is adhered to at least a part of at least one inner wall of the container by an adhesive, wherein the adhesive is formulated from one or more organic components having FDA approval; wherein the body is formed of polypropylene; wherein the body is shaped to contain therein a pressurised gas; wherein the foodstuff is a beverage; and wherein the adhesive sets at a temperature of between about 60°C and about 100°C.

According to a more highly aspect of the present invention there is provided a container for a foodstuff having held in the inside thereof a body, wherein the body is adhered to at least a part of at least one inner wall of the container by an adhesive, wherein the adhesive is formulated from one or more organic components having FDA approval; wherein the body is formed of polypropylene; wherein the body is shaped to contain therein a pressurised gas; wherein the foodstuff is a beverage; wherein the adhesive sets at a temperature of between about 60°C and about 100°C; and wherein the adhesive is formulated from one or more of an epoxy organic component and/or one or more of a polyamine organic component and/or one or more of a triethylene tetra-amine component.

The present invention will now be described only by way of example.

Two adhesives according to the present invention were used individually to adhere a treated plastics structure (such as polypropylene or nylon) for use as a widget (i.e. for use as a pressurised gas container) to the inner surface of the base of a coated aluminium can for containing a beverage, such as a beer. The treated plastics structure was formed by subjecting an untreated plastics structure to any one of flame, corona discharge or plasma discharge (corona discharge under vacuum).

The formulation of the adhesives were as follows:

| **FORMULATION 1** | | |
|---|---|---|
| | % wt of component | % wt of total formulation |
| FIRST COMPONENT (RESIN) | | |
| Isopropylidenediphenol-epichlorohydrin | 28.2 | 20 |
| Calcium carbonate | 56.3 | 40 |
| Phenolnovolak-epichlorohydrin | 14.1 | 10 |
| Titanium dioxide | 1.4 | 1 |

| SECOND COMPONENT (HARDENER) | | |
|---|---|---|
| Polyamide (dimerised vegetable oil) | 86.3 | 25 |
| Fumed silica | 6.9 | 2 |
| Triethylenetetramine | 3.4 | 1 |
| Polyethylene glycol | 3.4 | 1 |

Curing Conditions: 5 minutes at 100°C

The amount of the first or second component, or any of the constituents thereof, may be varied ±30 % with respect to the amounts given above.

Surprisingly, this adhesive adhered the plastics structures (especially the polypropylene structure and the nylon structure) to the inner surface of the base of the can.

| **FORMULATION 2** | |
|---|---|
| | % wt |
| Isopropylidenediphenol-epichlorohydrin | 60 |
| Cyanoguanidine | 6 |
| Calcium carbonate | 30 |
| Fumed silica | 2 |
| Carbon | 1 |
| Polyethylene glycol | 1 |

| | |
|---|---|
| Curing Conditions | 15 minutes at 180°C |
| or | 1 hour at 140°C |

Surprisingly, this adhesive adhered the plastics structures (especially the nylon structure at the shorter cure time and the polypropylene structure at the longer cure time) to the inner surface of the base of the can.

Modifications to the present invention will be apparent to those skilled in the art.

### APPENDIX

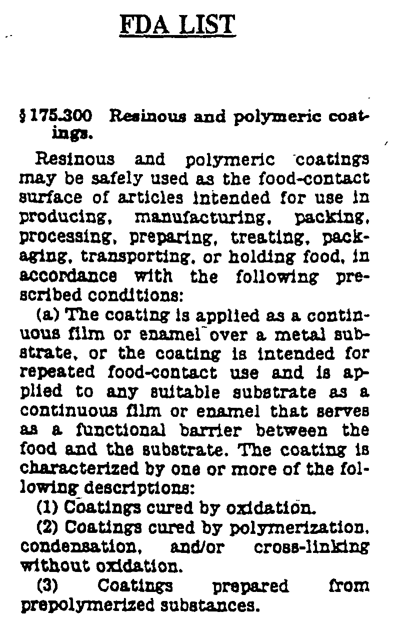

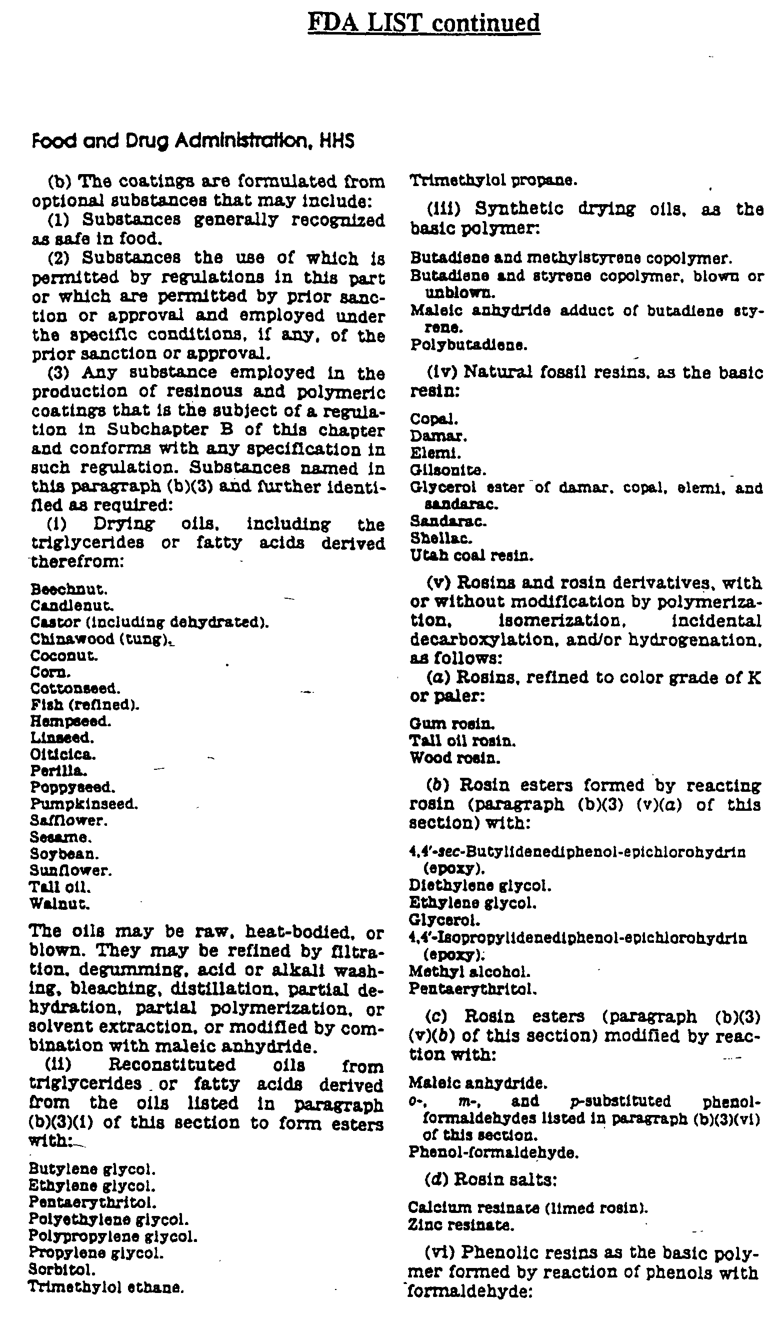

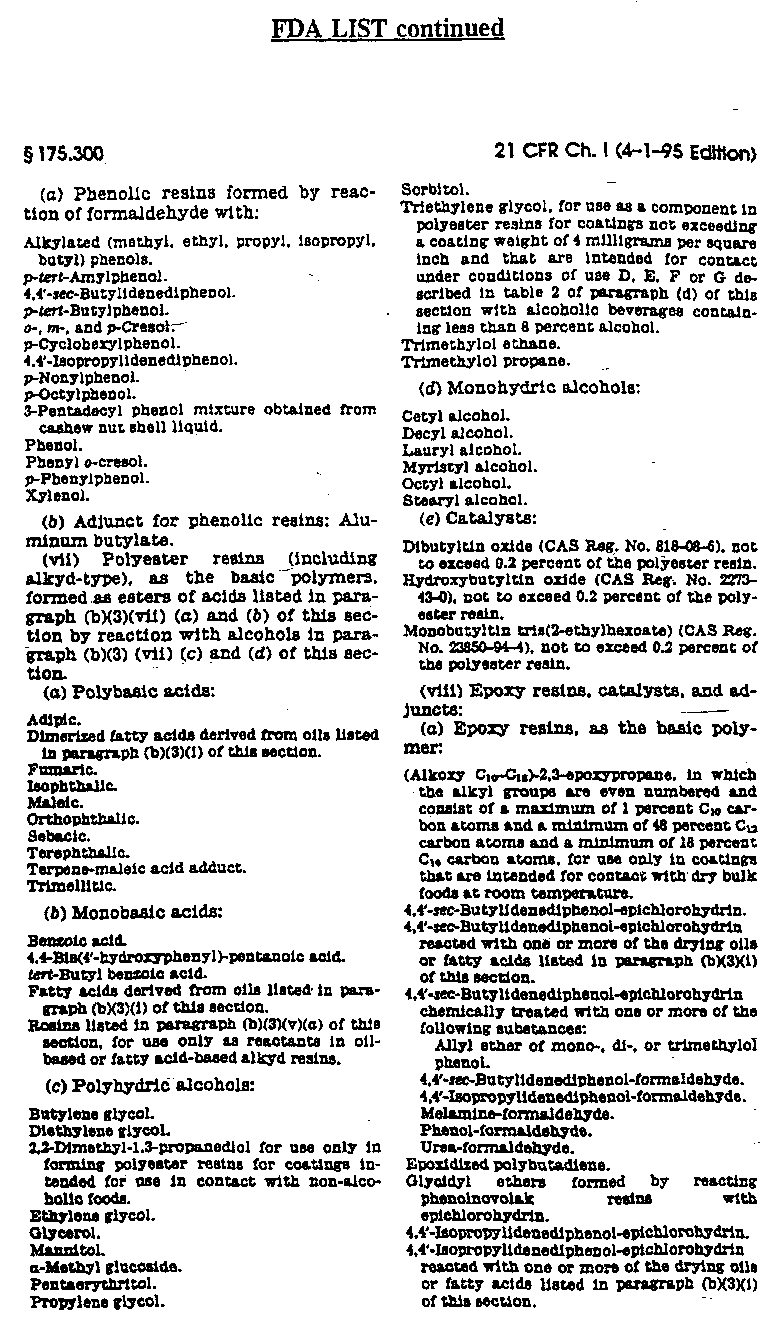

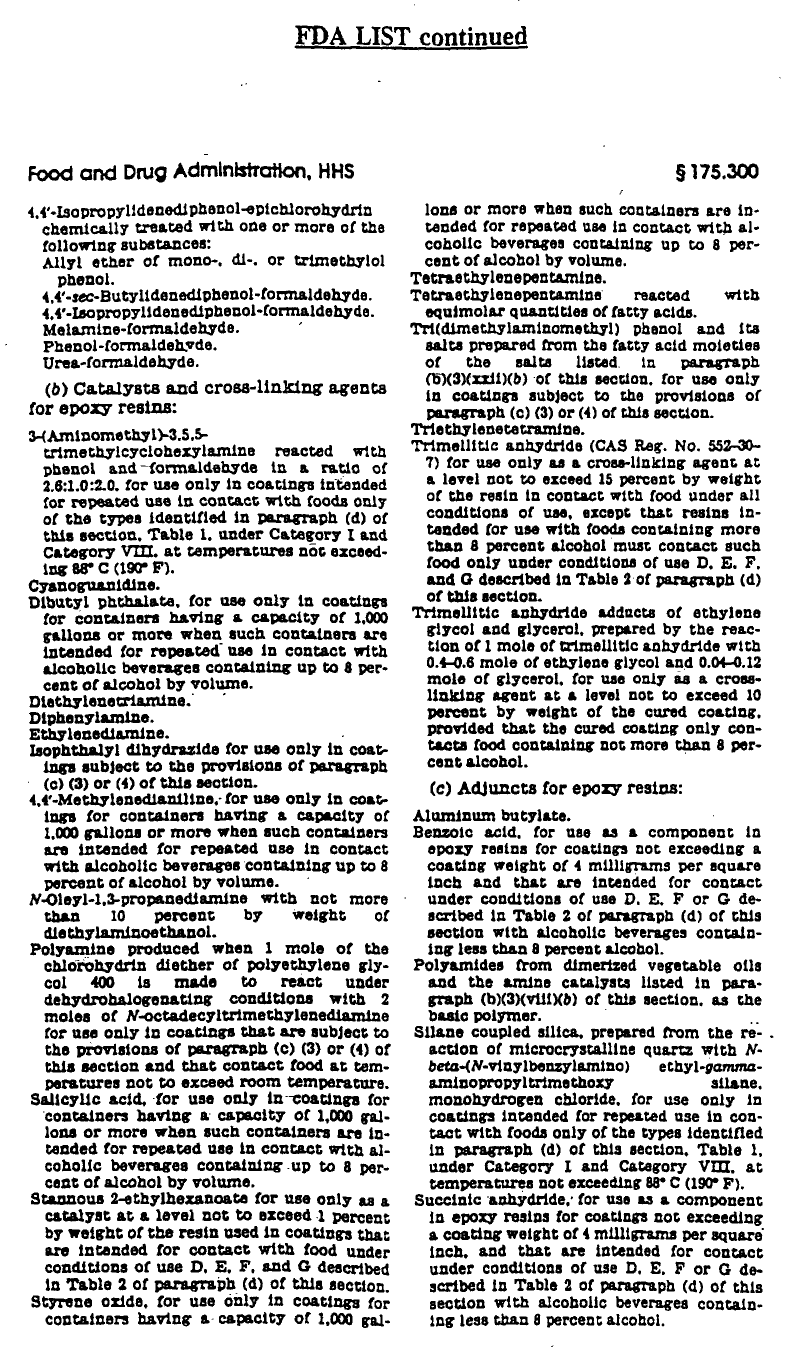

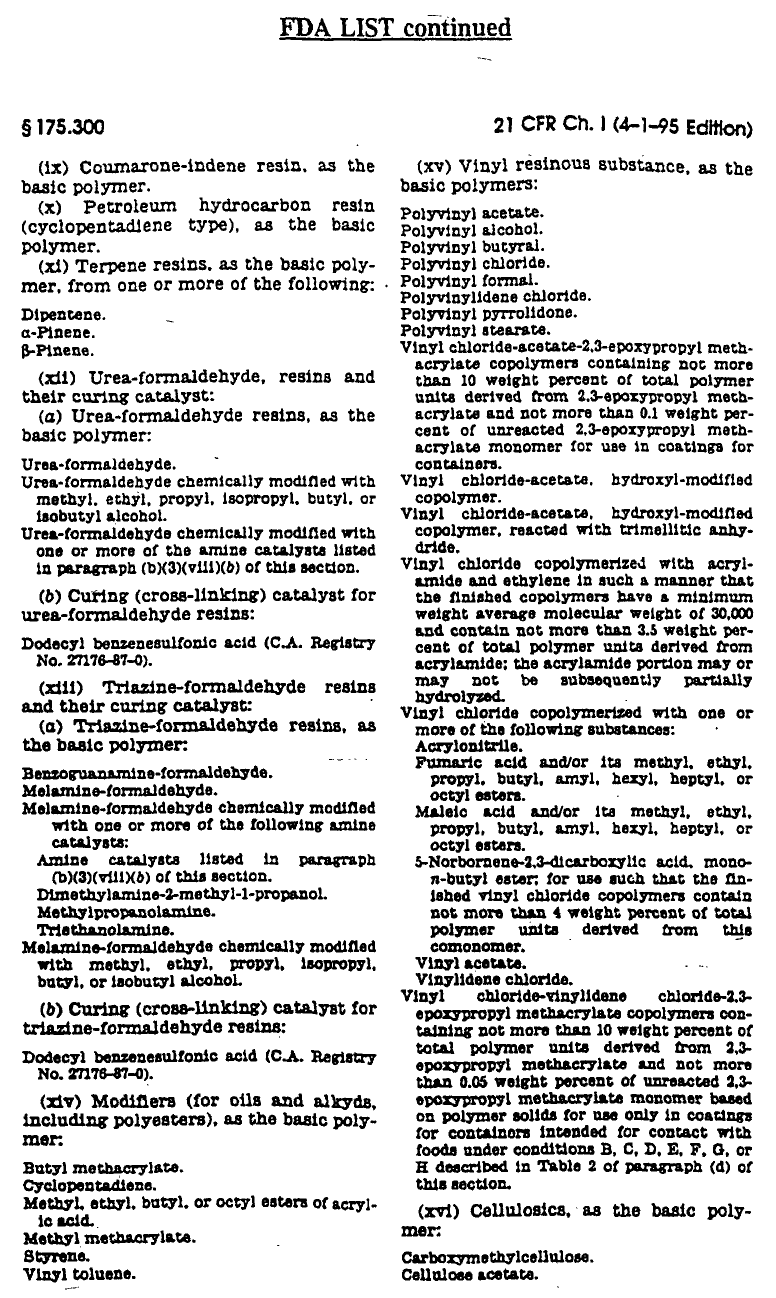

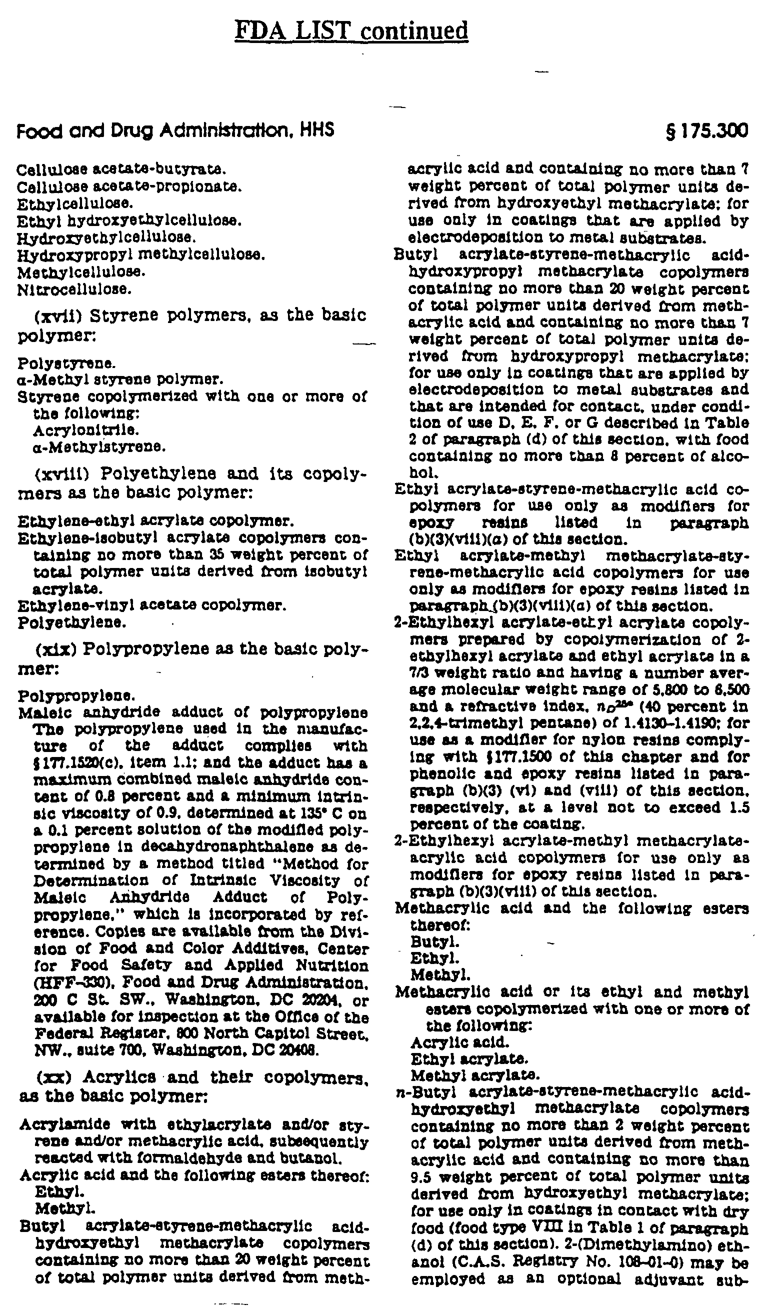

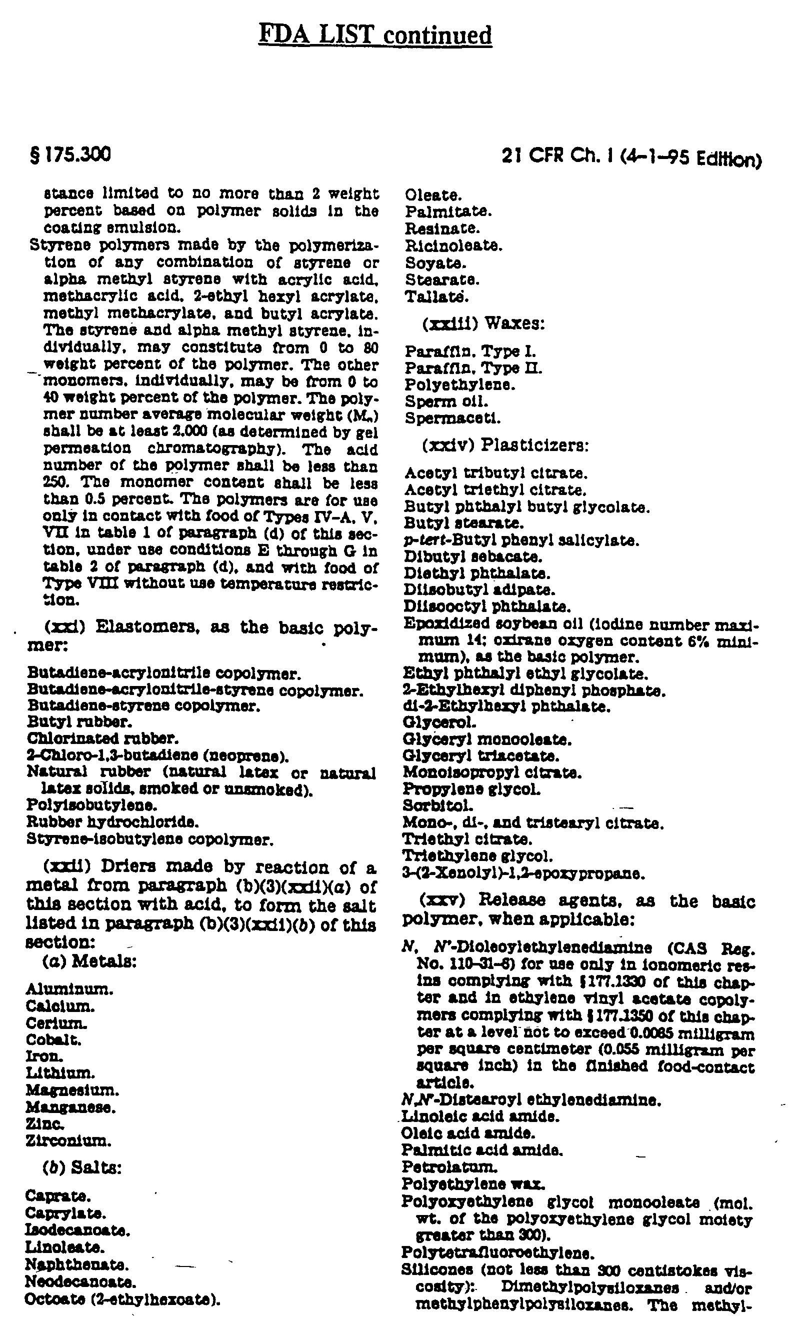

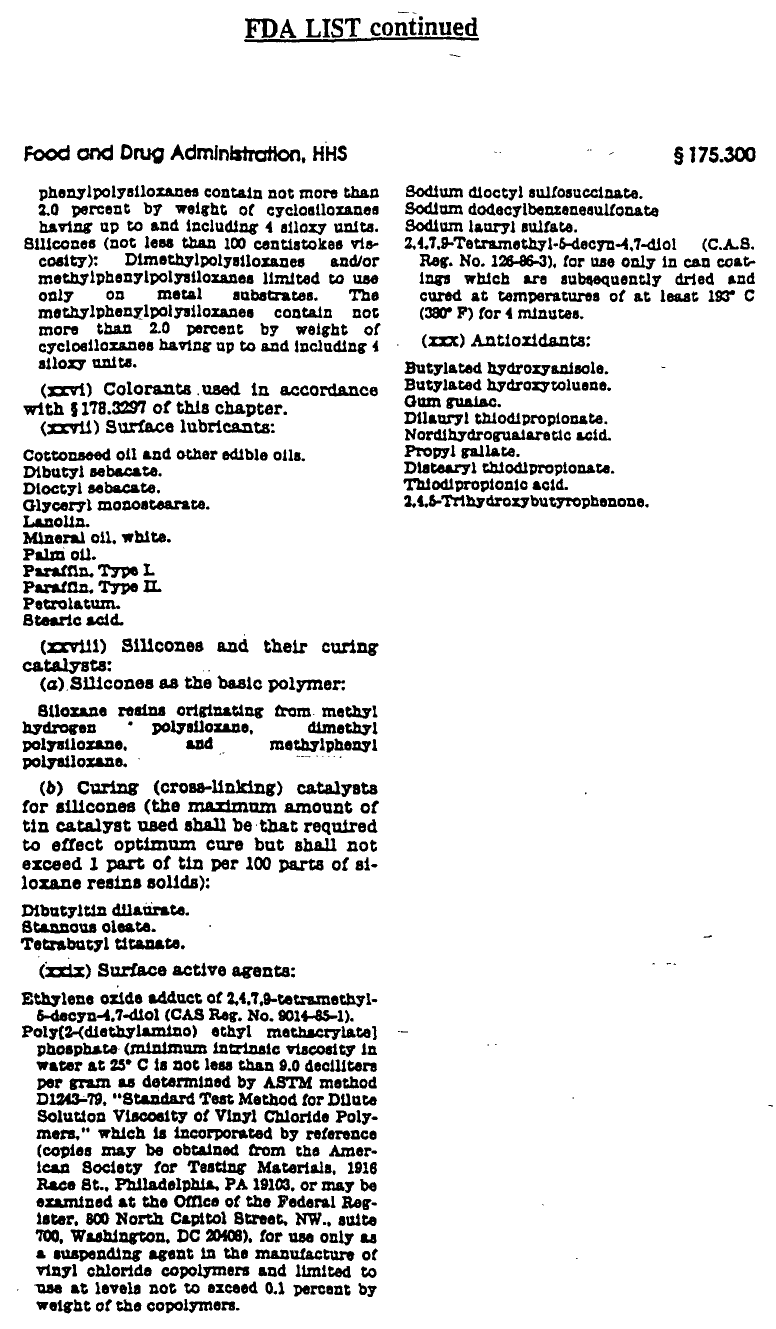

## Claims

1. A container for a foodstuff having held inside a body, wherein the body is adhered to at least a part of at least one inner wall of the container by an adhesive, wherein the adhesive is formulated from one or more organic components selected from the FDA approved list of compounds presented in Section 175.300 - 21 CFR Ch (4-1-95 Edition).

2. A container according to claim 1 wherein the adhesive further comprises one or more inorganic inert filler components.

3. A container according to claim 1 wherein the adhesive is not water soluble.

4. A container according to any one of claims 1 to 3, wherein the adhesive sets at a temperature of between 35°C and 200°C.

5. A container according to any one of claims 1 to 4, wherein the adhesive sets at a temperature of between 35°C and 160°C,

6. A container according to claim 5 wherein wherein the adhesive sets at a temperature of between 60°C and 100°C.

7. A container according to any one of the preceding claims, wherein the body is non-metallic.

8. A container according to any one of the preceding claims, wherein the body is formed of a plastics material.

9. A container according to any one of the preceding claims, wherein the body is formed of polypropylene.

10. A container according to claim 9, wherein the polypropylene has been pre-treated by any one of flame, corona discharge or plasma discharge.

11. A container according to any one of the preceding claims, wherein the body is shaped to contain therein a pressurised gas.

12. A container according to claim 11, wherein the body is for use as a widget.

13. A container according to any one of the preceding claims, wherein the container is a can.

14. A container according to any one of the preceding claims, wherein the container is for a beverage.

15. A container according to claim 14, wherein the beverage is an alcoholic beverage.

16. A container according to claim 14 or claim 15, wherein the beverage is a beer.

## Patentansprüche

1. Behälter für Lebensmittel, der im Inneren eines Körpers gehalten wird, wobei der Körper an wenigstens einem Teil wenigstens einer Innenwand des Behälters durch einen Klebstoff anhaftet, die aus der FDA-zugelassenen Verbindungsliste ausgewählt sind, welche in Abschnitt 175.300-21 CFR Ch (Auflage 4-1-95) aufgeführt sind.

2. Behälter nach Anspruch 1, worin der Klebstoff weiterhin eine oder mehrere anorganische inerte Füllstoffkomponenten umfaßt.

3. Behälter nach Anspruch 1, worin der Klebstoff nicht wasserlöslich ist.

4. Behälter nach einem der Ansprüche 1 bis 3, worin der Klebstoff bei einer Temperatur zwischen 35°C und 200°C abbindet.

5. Behälter nach einem der Ansprüche 1 bis 4, worin der Klebstoff bei einer Temperatur zwischen 35°C und 160°C abbindet.

6. Behälter nach Anspruch 5, worin der Klebstoff bei einer Temperatur zwischen 60°C und 100°C abbindet.

7. Behälter nach einem der vorausgehenden Ansprüche, worin der Körper nicht-metallisch ist.

8. Behälter nach einem der vorausgehenden Ansprüche, worin der Körper aus einem Kunststoffmaterial besteht.

9. Behälter nach einem der vorausgehenden Ansprüche, worin der Körper aus Polypropylen besteht.

10. Behälter nach Anspruch 9, worin das Polypropylen mit einer Flamme, einer Koronaentladung oder einer Plasmaentladung vorbehandelt wurde.

11. Behälter nach einem der vorausgehenden Ansprüche, worin der Körper so geformt ist, daß er darin ein unter Druck stehendes Gas enthält.

12. Behälter nach Anspruch 11, worin der Körper für die Verwendung als ein Widget geeignet ist.

13. Behälter nach einem der vorausgehenden Ansprüche, worin der Behälter eine Dose ist.

14. Behälter nach einem der vorausgehenden Ansprüche, worin der Behälter für ein Getränk dient.

15. Behälter nach Anspruch 14, worin das Getränk ein alkoholisches Getränk ist.

16. Behälter nach Anspruch 14 oder Anspruch 15, worin das Getränk Bier ist.

## Revendications

1. Récipient pour une denrée alimentaire, renfermant un corps, dans lequel le corps adhère à au moins une partie d'au moins une paroi intérieure du récipient par un adhésif, l'adhésif étant formulé à partir d'un ou plusieurs constituants organiques choisis dans la liste de composés autorisée par la FDA, présentée dans le paragraphe 175.300-21 CFR Ch (édition du 1-4-1995).

2. Récipient suivant la revendication 1, dans lequel l'adhésif comprend en outre un ou plusieurs constituants inertes inorganiques servant de charges.

3. Récipient suivant la revendication 1, dans lequel l'adhésif n'est pas hydrosoluble.

4. Récipient suivant l'une quelconque des revendications 1 à 3, dans lequel l'adhésif prend à une température comprise dans l'intervalle de 35°C à 200°C.

5. Récipient suivant l'une quelconque des revendications 1 à 4, dans lequel l'adhésif prend à une température comprise dans l'intervalle de 35°C à 160°C.

6. Récipient suivant la revendication 5, dans lequel l'adhésif prend à une température comprise dans l'intervalle de 60°C à 100°C.

7. Récipient suivant l'une quelconque des revendications précédentes, dans lequel le corps est non métallique.

8. Récipient suivant l'une quelconque des revendications précédentes, dans lequel le corps est formé d'une matière plastique.

9. Récipient suivant l'une quelconque des revendications précédentes, dans lequel le corps est formé de polypropylène.

10. Récipient suivant la revendication 9, dans lequel le polypropylène a été prétraité par l'un quelconque des moyens consistant en décharge par flamme, décharge corona et décharge par plasma.

11. Récipient suivant l'une quelconque des revendications précédentes, dans lequel le corps est façonné de manière à renfermer un gaz sous pression.

12. Récipient suivant la revendication 11, dans lequel le corps est destiné à être utilisé comme gadget.

13. Récipient suivant l'une quelconque des revendications précédentes, ledit récipient étant une boîte de conserve.

14. Récipient suivant l'une quelconque des revendications précédentes, le récipient étant destiné à une boisson.

15. Récipient suivant la revendication 14, dans lequel la boisson est une boisson alcoolisée.

16. Récipient suivant la revendication 14 ou la revendication 15, dans lequel la boisson est une bière.
